# EUROPÄISCHE PATENTSCHRIFT

(11) **EP 0 734 967 B1**
(45) Veröffentlichungstag und Bekanntmachung des Hinweises auf die Patenterteilung: **26.05.1999**
(21) Anmeldenummer: 96104116.7
(22) Anmeldetag: 15.03.1996
(51) Int. Cl.: B65D 77/06

(54) **Palettenbehälter**
Pallet container
Récipient palette

(30) Priorität: 30.03.1995 DE 19511723
(43) Veröffentlichungstag der Anmeldung: 02.10.1996
(73) Patentinhaber: PROTECHNA S.A., 1701 Fribourg (CH)
(72) Erfinder: Krass, Peter, Dipl.-Ing., 54486 Mülheim (DE); Schneegans, Jochen, Dr., 56237 Wittgert (DE); Weyrauch, Detlev, Dr., 56271 Kleinmaischeid (DE)
(74) Vertreter: Pürckhauer, Rolf, Dipl.-Ing.

(56) Entgegenhaltungen:
- DE-A- 3 839 647

## Beschreibung

Die Erfindung betrifft Palettenbehälter zum Transport und zur Lagerung von Flüssigkeiten, mit einer Flachpalette, einem austauschbaren Innenbehälter aus Kunststoff mit einer oberen, verschließbaren Einfüllöffnung und einer unteren Entleereinrichtung sowie einem den Innenbehälter umgebenden Außenmantel, der aus senkrechten und waagrechten Gitterstäben aus Metall besteht, die den mit Flüssiggut gefüllten Kunststoff-Innenbehälter abstützen, wobei die als Rohre ausgebildeten Gitterstäbe an den Kreuzungsstellen zur Bildung muldenartiger, in Längsrichtung der Gitterstäbe verlaufender, doppelwandiger Vertiefungen eingezogen sind, derart, daß an jeder Kreuzungsstelle zwischen den Längsrändern der Vertiefungen zweier rechtwinklig übereinander liegender Gitterstäbe vier Berührungsstellen mit jeweils einer der vierfachen Gitterstabwandstärke entsprechenden Materialanhäufung entstehen, und die vier Berührungsstellen zweier Gitterstäbe an den Kreuzungsstellen miteinander verschweißt sind.

Die Schweißverbindungen an den Kreuzungsstellen der senkrechten und waagrechten Gitterstäbe des Gittermantels von aus der DE-A-38 39 647 bekannten Palettenbehältern dieser Gattung sind statischen Biegebeanspruchungen aufgrund von Stapellasten beim Stapeln mehrerer Behälter und Biegeschwellbeanspruchungen beim Transport durch Schwallschwingungen, die vom Flüssiggut im Kunststoff-Innenbehälter ausgehen und über den flexiblen Mantel des Innenbehälters auf den Gittermantel übertragen werden, sowie durch das Transportfahrzeug übertragene Fahrschwingen und einer Schlag- und Stoßbeanspruchung z.B. beim Fall des Palettenbehälters aus der Höhe ausgesetzt. Derartige Beanspruchungen können zum Bruch der Schweißverbindungen an den Kreuzungsstellen der Gitterstäbe des Gittermantels führen, so daß die erforderliche Stapel- und Transportsicherheit des Palettenbehälters nicht mehr gewährleistet ist.

Der Erfindung liegt die Aufgabe zugrunde, die Haltbarkeit der Schweißverbindungen an den Kreuzungsstellen der senkrechten und waagrechten Gitterstäbe des Gittermantels des gattungsgemäßen Palettenbehälters durch eine Entlastung von statischen und dynamischen Beanspruchungen im Betrieb zu erhöhen und dadurch die Stapel- und Transportsicherheit des Behälters zu verbessern.

Diese Aufgabe ist erfindungsgemäß gelöst durch einen Palettenbehälter mit den Merkmalen des Patentanspruchs 1.

Die Unteransprüche beinhalten zweckmäßige Weiterbildungen der Erfindung.

Durch die erfindungsgemäße Formgebung der senkrechten und waagrechten Gitterstäbe an deren Kreuzungsstellen bei einem Palettenbehälter mit einem Gittermantel und Kunststoff-Innenbehälter, die begrenzt elastische Biegestellen im Bereich der Schweißverbindungen der Gitterstäbe an den Kreuzungsstellen schafft, werden die Schweißverbindungen von den beim Stapeln auftretenden statischen Biegebeanspruchungen und den dynamischen Biegebeanspruchungen beim Transport weitgehendst entlastet, so daß eine wesentliche Verbesserung der Haltbarkeit der Schweißverbindungen der Gitterstäbe des Gittermantels und damit eine erhöhte Betriebssicherheit des Palettenbehälters gegenüber den bekannten Behältern erreicht wird.

Die Erfindung ist nachstehend anhand von Zeichnungen näher erläutert. Es zeigt
- Fig. 1: eine perspektivische Darstellung eines Palettenbehälters mit Gittermantel,
- Fig. 2: eine perspektivische Darstellung eines Gitterstabes im Bereich einer Kreuzungsstelle,
- Fig. 3: einen Querschnitt des Gitterstabes nach Linie III-III der Fig. 2,
- Fig. 4: einen Querschnitt des Gitterstabes nach Linie IV-IV der Fig. 2,
- Fig. 5: die Draufsicht auf eine Kreuzungsstelle zweier Gitterstäbe vor dem Widerstandspreßverschweißen der Stäbe,
- Fig. 6: eine Ansicht der Kreuzungsstelle zweier Gitterstäbe in Pfeilrichtung VI der Fig. 5 und
- Fig. 7: eine der Ansicht nach Fig. 6 entsprechende Ansicht einer Kreuzungsstelle nach dem Verschweißen der Stäbe.

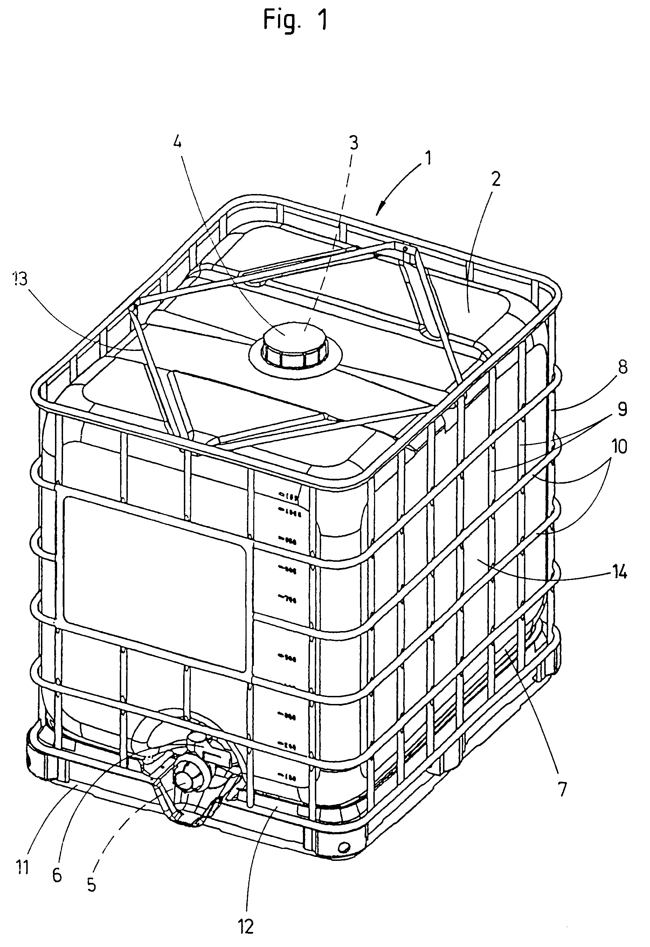

Der als Ein- und Mehrwegbehälter verwendete Palettenbehälter 1 nach Fig. 1 für den Transport und die Lagerung von Flüssiggut weist als Hauptbauteile einen austauschbaren, quaderförmigen Innenbehälter 2 aus Polyethylen mit abgerundeten Ecken, der mit einem durch einen Schraubdeckel 4 verschließbaren Einfüllstutzen 3 und einem Auslaufstutzen 5 mit einem Entnahmehahn 6 sowie einem Ablaufboden 7 ausgestattet ist, einen Außenmantel 8 aus sich kreuzenden senkrechten und waagrechten Gitterstäben 9, 10 aus Metall, eine als flache Bodenwanne 12 aus Blech ausgebildete Palette 11 mit euronormgerechten Längen- und Breitenabmessungen zur formschlüssigen Aufnahme des Kunststoff-Innenbehälters 2 sowie einen oberen Rahmen 13 aus diagonal angeordneten Rohrstreben zur Versteifung des Gittermantels 8 und zum Schutz des Innenbehälters 2 auf.

Die senkrechten und waagrechten Gitterstäbe 9, 10 stützen die Außenwand 14 des mit einer Flüssigkeit gefüllten Innenbehälters 2 ab und bilden durchgehende äußere und innere Begrenzungsebenen, so daß ein "Klettern" von nebeneinander stehenden Palettenbehältern 1 aufgrund einer Verwindung der Ladefläche beim Transport der Behälter z.B. mit einem Lastkraftwagen ausgeschlossen ist.

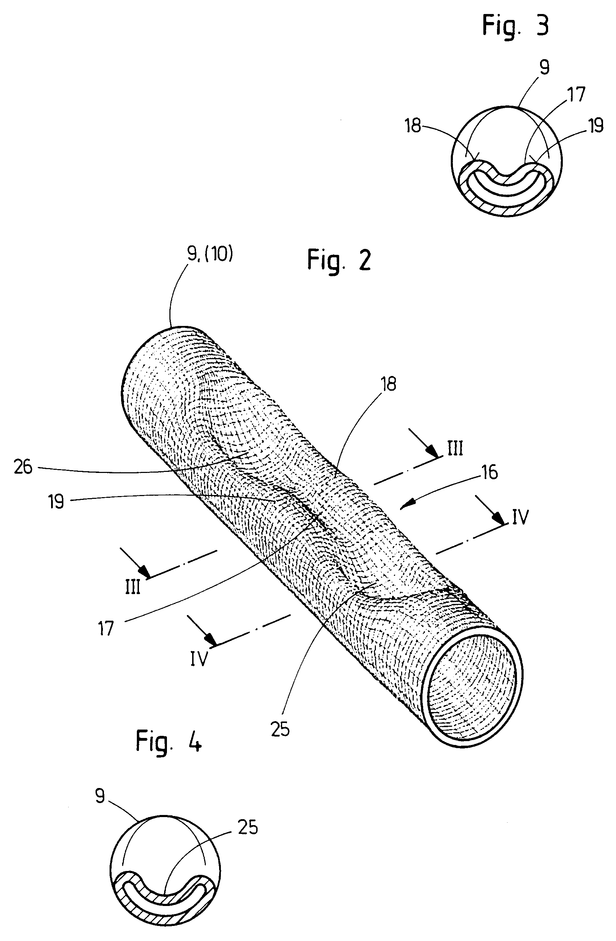

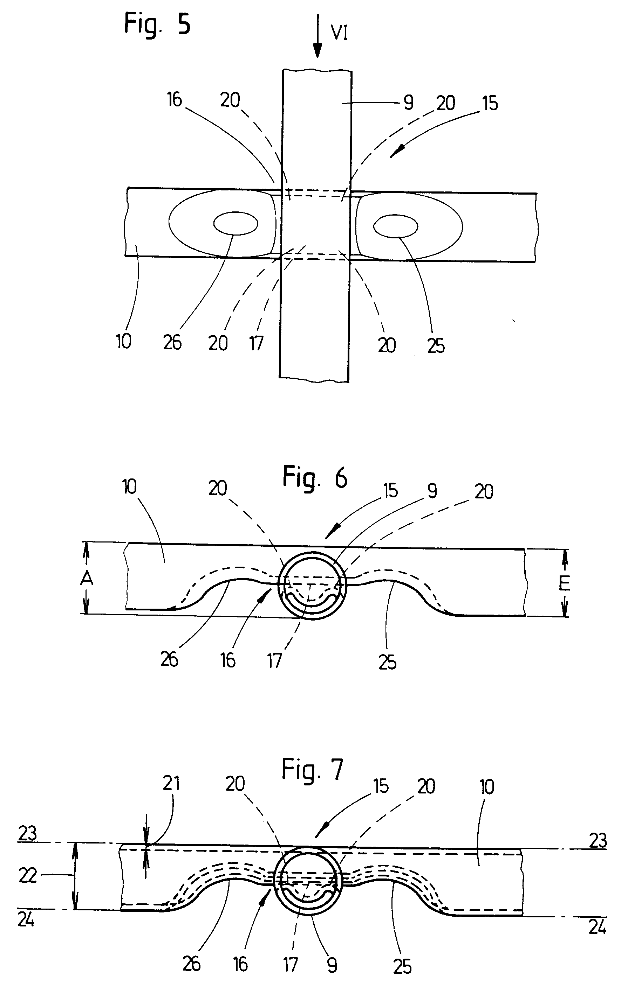

An den Kreuzungsstellen 15 sind die senkrechten und waagrechten Gitterstäbe 9, 10 zur Bildung muldenartiger, in Längsrichtung der Stäbe verlaufender, doppelwandiger Vertiefungen 16 mit einer nierenartigen Querschnittsform eingezogen. Die muldenartigen Vertiefungen 16 weisen eine mittige Erhöhung 17 auf (Fign. 2 - 4). Diese Formgebung der Gitterstäbe 9, 10 bewirkt, daß an jeder Kreuzungsstelle 15 zwischen den Längsrändern 18, 19 der mittigen Erhöhungen 17 der muldenartigen Vertiefungen 16 zweier rechtwinklig übereinander liegender Gitterstäbe 9, 10 vier in eine Ebene liegende Berührungsstellen 20 mit jeweils einer der vierfachen Wandstärke 21 der Gitterstäbe entsprechenden Materialanhäufung entstehen (Fign. 5 - 7). Die mittigen Erhöhungen 17 der in die Gitterstäbe 9, 10 eingezogenen Vertiefungen 16 sind derart bemessen, daß das in Richtung der Normalen durch die Kreuzungsstellen 15 gemessene Ausgangsmaß A vor dem Verschweißen der zusammengefügten Gitterstäbe 9, 10 größer als ein Gitterstabaußendurchmesser 22 ist (Fig. 6). Die Gitterstäbe 9, 10 werden an den Kreuzungsstellen 15 jeweils im Bereich der vier Berührungsstellen 20 durch eine elektrische Widerstandspreßschweißung derart miteinander verbunden, daß das Ausgangsmaß A unter Druck auf das Endmaß E reduziert wird, das einem Gitterstabaußendurchmesser 22 entspricht, und die Gitterstäbe 9, 10 innen und außen gemeinsame Tangentialebenen 23-23 und 24-24 aufweisen (Fig. 7).

Durch die Materialanhäufung einer vierfachen Gitterstabwandstärke 21 an jeder der vier Berührungsstellen 20 an allen Kreuzungsstellen 15 der senkrechten und waagrechten Gitterstäbe 9, 10 des Außenmantels 8 wird erreicht, daß bei einer entsprechenden Steuerung des Schweißstromes und des Druckes der Schweißpresse ein Strom über die Berührungsstellen 20 fließt, der auf die Berührungsstellen beschränkte, gleichmäßige Schmelzbäder erzeugt, die homogene Schweißverbindungen an den Kreuzungsstellen 15 zwischen den Gitterstäben 9, 10 gewährleisten.

Die beidseitig an die Erhöhung 17 mit den vier Berührungs- und Schweißstellen 20 anschließenden Abschnitte 25, 26 der muldenartigen Vertiefung 16 der Gitterstäbe 9, 10 bilden begrenzt elastische Biegestellen mit einem gegenüber der Erhöhung 17 verringerten Biegewiderstandsmoment zur Entlastung der Schweißverbindungen an den Kreuzungsstellen 15 der senkrechten und waagrechten Gitterstäbe 9, 10 bei statischer und/oder dynamischer Belastung des Gittermantels 8.

Bei einer möglichen elektrischen Punktverschweißung der Gitterstäbe 9, 10 an den Kreuzungsstellen 15 entspricht das senkrecht zur Ebene des Gittermantels 8 gemessene Dickenmaß der Kreuzungsstellen 15 ungefähr dem in Fig. 6 eingezeichneten Maß A, das etwas größer ist als der Außendurchmesser 22 der Gitterstäbe 9, 10, so daß die inneren und äußeren Begrenzungsebenen der senkrechten und der waagrechten Gitterstäbe 9, 10 geringfügig parallel nach innen und außen versetzt sind. Dies hat jedoch keinen nachteiligen Einfluß auf die Vermeidung des in der Beschreibungseinleitung erwähnten "Klettereffektes" nebeneinander stehender Palettenbehälter beim Transport.

## Patentansprüche

1. Palettenbehälter (1) zum Transport und zur Lagerung von Flüssigkeiten, mit einer Flachpalette (11), einem austauschbaren Innenbehälter (2) aus Kunststoff mit einer oberen, verschließbaren Einfüllöffnung (3) und einer unteren Entleereinrichtung (5) sowie einem den Innenbehälter umgebenden Außenmantel (8), der aus senkrechten und waagrechten Gitterstäben (9, 10) aus Metall besteht, die den mit Flüssigkeit gefüllten Kunststoff-Innenbehälter abstützen, wobei die als Rohre ausgebildeten Gitterstäbe an den Kreuzungsstellen (15) zur Bildung muldenartiger, in Längsrichtung der Gitterstäbe verlaufender, doppelwandiger Vertiefungen (16) eingezogen sind, derart, daß an jeder Kreuzungsstelle zwischen den Längsrändern (18, 19) der Vertiefungen (16) zweier rechtwinklig übereinander liegender Gitterstäbe vier Berührungsstellen (20) mit jeweils einer der vierfachen Gitterstabwandstärke entsprechenden Materialanhäufung entstehen, und die vier Berührungsstellen zweier Gitterstäbe an den Kreuzungsstellen miteinander verschweißt sind, dadurch gekennzeichnet, daß die muldenartigen Vertiefungen (16) der senkrechten und waagrechten Gitterstäbe (9, 10) eine über den Querschnitt der Vertiefungen verlaufende, mittige Erhöhung (17) aufweisen, jeweils zwei an den Kreuzungsstellen (15) übereinander liegende Gitterstäbe (9, 10) an den vier Berührungsstellen (20) dieser Erhöhungen (17) miteinander verschweißt sind und die beidseitig an die Erhöhung (17) mit den Berührungs- und Schweißstellen (20) anschließenden Abschnitte (25, 26) der Vertiefungen (16) der Gitterstäbe (9, 10) begrenzt elastische Biegestellen mit einem gegenüber der Erhöhung (17) verringerten Biegewiderstandsmoment zur Entlastung der Schweißverbindungen an den Kreuzungsstellen (15) bei statischer und/oder dynamischer Belastung des Gittermantels (8) bilden.

2. Palettenbehälter nach Anspruch 1, dadurch gekennzeichnet, daß die an den Kreuzungsstellen (15) miteinander verschweißten Gitterstäbe (9, 10) innen und außen gemeinsame Tangentialebenen (23-23, 24-24) aufweisen.

3. Palettenbehälter nach Anspruch 1 und 2, gekennzeichnet durch eine elektrische Widerstandspreßverschweißung der Gitterstäbe (9, 10) an den Kreuzungsstellen (15).

4. Palettenbehälter nach einem der Ansprüche 1 bis 3, gekennzeichnet durch eine elektrische Punktverschweißung der Gitterstäbe (9, 10) an den Kreuzungsstellen (15).

## Claims

1. Pallet container (1) for the transporting and storing of liquids, having a flat pallet (11), an exchangeable inner container (2) made of plastic material with an upper, closeable filler opening (3) and a lower emptying device (5) and also, surrounding the inner container, one outer sleeve (8) which consists of vertical and horizontal lattice bars (9, 10) made of metal which support the plastic inner container filled with liquid, the lattice bars which are configured as tubes being indented at the intersection points (15) to form trough-like, double-walled recesses (16) extending in the longitudinal direction of the lattice bars in such a manner that at each intersection point between the longitudinal edges (18, 19) of the recesses (16) of two lattice bars lying perpendicularly one above the other there arise four contact points (20) with a material accumulation respectively corresponding to the quadruple lattice bar wall thickness, and the four contact points of two lattice bars being welded together at the intersection points **characterised in that** the trough-like recesses (16) of the vertical and horizontal lattice bars (9, 10) have a central raised part (17) extending across the cross-section of the recesses, two lattice bars (9, 10) respectively lying one above the other at the intersection points (15) are welded together at the four contact points (20) of these raised parts (17) and the incisions (25, 26) of the recesses (16) of the lattice bars (9, 10) adjacent on both sides to the raised part (17) with the contact and weld points (20) form restrictedly elastic bending points with a reduced bending resistance moment relative to the raised part (17) for relieving the weld joints at the intersection points (15) upon application of static and/or dynamic pressure on the lattice sleeve (8)

2. Pallet container according to Claim 1 **characterised in that** the lattice bars (9, 10) which are welded together at the intersection points (15) have on the inside and the outside common tangential planes (23-23, 24-24).

3. Pallet container according to Claims 1 and 2 **characterised by** an electric resistance pressure welding of the lattice bars (9, 10) at the intersection points (15).

4. Pallet container according to one of the Claims 1 to 3 **characterised by** an electric spot weld of the lattice bars (9, 10) at the intersection points (15).

## Revendications

1. Cuve-palette (1) destinée à transporter et stocker des liquides, comportant une palette (11) plate, une cuve (2) intérieure remplaçable, en matière plastique, dotée d'une ouverture (3) supérieure de remplissage pouvant être fermée et d'une ouverture (5) inférieure d'évacuation, et une enveloppe (8) extérieure entourant la cuve intérieure, qui est constituée de barreaux (9, 10) métalliques verticaux et horizontaux qui soutiennent la cuve intérieure en matière plastique remplie de liquide, les barreaux réalisés sous forme de tubes étant, aux points (15) d'intersection, emboutis pour former des renfoncements (16) à double paroi du genre cuvettes, s'étendant dans la direction longitudinale des barreaux, de telle sorte qu'à chaque point d'intersection, entre les bords (18, 19) longitudinaux des renfoncements (16) de deux barreaux superposés à angle droit, quatre points (20) de contact apparaissent avec chaque fois une accumulation de matériau correspondant au quadruple de l'épaisseur de paroi des barreaux, et les quatre points de contact de deux barreaux aux points d'intersection sont soudés entre eux, **caractérisée** en ce que les renfoncements (16) du genre cuvettes des barreaux (9, 10) métalliques verticaux et horizontaux comportent une bosse (17) centrale s'étendant sur la section transversale des renfoncements, deux barreaux (9, 10) superposés aux points (15) d'intersection sont chaque fois soudés entre eux aux quatre points (20) de contact de ces bosses (17), et les parties (25, 26) des renfoncements (16) des barreaux (9, 10) qui se raccordent de part et d'autre à la bosse (17) pourvue des points (20) de contact et de soudure constituent des zones de flexion à élasticité limitée, dotées d'un couple réduit de résistance à la flexion par rapport à la bosse (17), afin de soulager les joints soudés aux points (15) d'intersection en cas de sollicitation statique et/ou dynamique de l'enveloppe (8) en forme de grille.

2. Cuve-palette suivant la revendication 1, **caractérisée** en ce que les barreaux (9, 10) soudés entre eux aux points (15) d'intersection possèdent intérieurement et extérieurement des plans (23-23, 24-24) tangentiels communs.

3. Cuve-palette suivant la revendication 1 ou 2, **caractérisée** par un soudage électrique par résistance des barreaux (9, 10) aux points (15) d'intersection.

4. Cuve-palette suivant l'une des revendications 1 à 3, **caractérisée** par un soudage électrique par points des barreaux (9, 10) aux points (15) d'intersection.
